# EUROPEAN PATENT APPLICATION

(11) **EP 4 070 654 A1**
(43) Date of publication of application: **12.10.2022**
(21) Application number: 21305457.0
(22) Date of filing: 08.04.2021
(51) Int. Cl.: A01K 11/00

(54) **IMPROVEMENTS IN DEVICES FOR ANIMALS**

(71) Applicant: Allflex Australia Pty Ltd, Capalaba, QLD 4157 (AU); Chevillot Sas, 81000 Albi (FR)
(72) Inventor: WILKINSON, Benjamin Thomas John, CAPALABA, 4157 (AU); FILIPPELLI, Antonin Maurice Patrick, 81000 ALBI (FR); LE MAY, Quentin Serge, 81000 ALBI (FR); TEYCHENE, Bruno Philippe Jean, 81000 ALBI (FR)
(74) Representative: Vidon Brevets & Stratégie

(57) **Abstract**

Improvements in devices for animals, such as animal tag applicators, animal tissue sample extractors, and animal puncture devices, comprising: a first body portion comprising: a first jaw portion configured to engage a first portion of an animal tag; a first handle portion; and a first central portion between the first jaw portion and the first handle portion; a second body portion comprising: a second jaw portion configured to engage a second portion of an animal tag; a second handle portion; and a second central portion between the second jaw portion and the second handle portion; and a clamp bush configured to retain the first central portion and the second central portion together; wherein an outer face of the first central portion comprises a border around an outer edge of the outer face of the first central portion and the outer face of the second central portion comprises a border around an outer edge of the outer face of the first central portion.

## Description

### FIELD

The invention relates to improvements in devices for animals, such as animal tag applicators, animal tissue sample extractors, and animal puncture devices, including but not limited to where such devices are hand-held plier devices.

### BACKGROUND

When rearing livestock (such as sheep, cattle, goats, or deer), a number of devices are used. These devices include animal tag applicators, animal tissue sample extractors, animal puncture devices, and devices which perform multiple of these functions simultaneously or sequentially. Each of these devices have a pair of jaws which close or move to perform their function.

Animal tag applicators are used to apply an animal tag to an animal. A tag may be attached to each animal for identification of the animal. For example, this may be an ear tag which is attached through the cartilage of an animal's ear. In an embodiment, such tags may be applied using an applicator.

One style of tag is a two-piece tag which has a male portion configured to engage with a female portion. In an embodiment, an applicator is charged with a female and male portion of the tag. After a user positions the charged applicator at an appropriate location of the animal's ear, the user triggers the applicator. This causes the male portion to pierce the animal's ear and be permanently attached to the animal.

Another style of tag is a one-piece tag which has a barbed end configured to be retained in an animal's ear. In an embodiment, an applicator is charged with the one-piece tag. After a user positions the charged applicator at an appropriate location of the animal's ear, the user triggers the applicator. This causes the barbed end to pierce the animal's ear, with the barb retaining the tag in the ear.

Animal tissue sample extractors may be used extract a portion of flesh from the animal. In an embodiment, the device has a piercing member at one side of the jaws and a collection member at the other. After a user positions the applicator at an appropriate location of the animal's ear, for example, the user triggers the applicator. This causes the piercing member to cut out a portion of the animal's ear which is then retained in the collection member. The tissue sample may be used for testing the health or other characteristics of the animal.

Animal puncture devices may also be used to form a hole in a part of the animal. This can be to cause an opening in the animal's ear or other body part to allow a tag or other device to be inserted. In an embodiment, the device has a punching member at one end of the jaw. After a user positions the device at an appropriate part of the animal (such as over the cartilage of the animal's ear), the user triggers the device. This causes the punching member to cut out a hole in the animal's body part.

In some cases, the devices may be hand-held plier devices. These have the form of handles which, when pressed together, actuate the device and cause the jaws to close or move.

The device may be a power assisted devices, where a user's compression of the handles is assisted by an actuator, motor, or other mechanical, electrical, hydraulic, or pneumatic mechanism. The device may additionally or alternatively be part of an automated system where the user does not manually press handles together, but instead the jaws are actuated by an actuator, motor, or other mechanical, electrical, hydraulic, or pneumatic mechanism (for example, in response to a user pressing a button or to a sensor being triggered).

### SUMMARY

In a first example, there is provided an animal tag applicator, comprising:
a first body portion comprising:
   a first jaw portion configured to engage a first portion of an animal tag;
   a first handle portion; and
   a first central portion between the first jaw portion and the first handle portion;
a second body portion comprising:
   a second jaw portion configured to engage a second portion of an animal tag;
   a second handle portion; and
   a second central portion between the second jaw portion and the second handle portion; and
a clamp bush configured to retain the first central portion and the second central portion together;
wherein an outer face of the first central portion comprises a border around an outer edge of the outer face of the first central portion and the outer face of the second central portion comprises a border around an outer edge of the outer face of the first central portion.

In a second example, there is provided the animal tag applicator of the first example, wherein the height of the border relative to the corresponding outer face is between about 0.1mm and about 0.5mm.

In a third example, there is provided the animal tag applicator of the second example, wherein the height of the border relative to the corresponding outer face is about 0.3mm.

In a fourth example, there is provided the animal tag applicator of any one of the first to third examples, wherein the clamp bush is configured to limit side-to-side movement of the first central portion and the second portion within the clamp bush.

In a fifth example, there is provided the animal tag applicator of any one of the first to fourth examples, wherein a clearance between an inner surface of the clamp bush and the border of the first central portion is about 0.1mm and a clearance between an inner surface of the clamp bush and the border of the second central portion is about 0.1mm.

In a sixth example, there is provided the animal tag applicator of any one of the first to fifth examples, wherein the clamp bush is configured to minimise friction when the first central portion and/or second central portion move relative to the clamp bush.

In a seventh example, there is provided the animal tag applicator of any one of the first to sixth examples, wherein a clearance between an inner surface of the clamp bush and the first central portion, other than the border, is about 0.3mm and a clearance between an inner surface of the clamp bush and the second central portion, other than the border, is about 0.3mm.

In an eighth example, there is provided the animal tag applicator of any one of the first to seventh examples, wherein a force of less than around 400N is required to move the animal tag applicator into a closed position.

In a ninth example, there is provided an animal tag applicator, comprising:
a first body portion comprising:
   a first jaw portion configured to engage a first portion of an animal tag;
   a first handle portion; and
   a first central portion between the first jaw portion and the first handle portion;
a second body portion comprising:
   a second jaw portion configured to engage a second portion of an animal tag;
   a second handle portion; and
   a second central portion between the second jaw portion and the second handle portion; and
a low-friction clamp bush configured to retain the first central portion and the second central portion together;
wherein each of the first handle portion and the second handle portion comprise:
   a shoulder at a proximal end;
   a curved end at a distal end of the handle portion; and
   a grip between the shoulder and the curved end.

In a tenth example, there is provided the animal tag applicator of the ninth example, further comprising:
a helical spring configured to bias apart the first handle portion and the second handle portion;
wherein each of the first handle portion and the second portion further comprise:
   a recess configured to retain a respective end of the helical spring, the recess being spaced laterally from the respective shoulder.

In an eleventh example, there is provided the animal tag applicator of the ninth or tenth examples wherein each shoulder has a curved profile.

In a twelfth example, there is provided the animal tag applicator of any one of the ninth to eleventh examples, wherein the curved end is configured to guide a user's fingers towards the respective grip.

In a thirteenth example, there is provided the animal tag applicator of any one of the ninth to twelfth examples, wherein the grip is recessed relative to the respective curved end and the shoulder.

In a fourteenth example, there is provided the animal tag applicator of any one of the ninth to thirteenth examples, wherein the grip has a curved profile.

In a fifteenth example, there is provided the animal tag applicator of any one of the ninth to fourteenth examples, wherein the first handle portion and the second handle portion are configured for two-handed use.

In a sixteenth example, there is provided an animal tag applicator, comprising:
a first body portion comprising:
   a first jaw portion configured to engage a first portion of an animal tag;
   a first handle portion; and
   a first central portion between the first jaw portion and the first handle portion;
a second body portion comprising:
   a second jaw portion configured to engage a second portion of an animal tag;
   a second handle portion; and
   a second central portion between the second jaw portion and the second handle portion; and
a clamp bush configured to retain the first central portion and the second central portion together;
wherein the first central portion comprises a first groove;
the second central portion comprises a post configured to fit into the first groove and to move along the first groove when the applicator moves between an open position and a closed position; and
the applicator is fully in the open position when the post of the second central portion contacts an end of the first groove.

In a seventeenth example, there is provided the animal tag applicator of the sixteenth example, wherein:
the second central portion comprises a second groove;
the first central portion comprises a post configured to fit into the second groove and to move along the second groove when the applicator moves between an open position and a closed position.

In an eighteenth example, there is provided the animal tag applicator of the sixteenth example, wherein in the fully open position, the first jaw portion is spaced from the second handle portion and the second jaw portion is spaced from the first handle portion.

In a nineteenth example, there is provided an animal tag applicator, comprising:
a first body portion comprising:
   a first jaw portion configured to engage a first portion of an animal tag;
   a first handle portion; and
   a first central portion between the first jaw portion and the first handle portion;
a second body portion comprising:
   a second jaw portion configured to engage a second portion of an animal tag;
   a second handle portion; and
   a second central portion between the second jaw portion and the second handle portion; and
a clamp bush configured to retain the first central portion and the second central portion together; and
a variable force helical spring configured to bias apart the first handle portion and the second handle portion.

In a twentieth example, there is provided the animal tag applicator of the nineteenth example, wherein the variable force helical spring is a dual rate variable force spring configured to exert a first force at a first part of its decompression and a second force at a second part of its decompression.

In a twenty-first example, there is provided the animal tag applicator of the twentieth example, wherein a switch between the first force and the second force during compression occurs at between about 25% and about 75%, or between about 40% and 60%, or about 50% of its decompression.

In a twenty-second example, there is provided the animal tag applicator of the twentieth example or the twenty-first example, wherein the first force is a relatively low force and the second force is a relatively high force.

In a twenty-third example, there is provided the animal tag applicator of the twenty-second example, wherein the low force is less than about 70%, or less than about 50%, or less than about 30% of the high force.

In a twenty-fourth example, there is provided the animal tag applicator of any one of the nineteenth to twenty-third examples, wherein the spring is configured to exert a higher force when a pin of the first jaw portion is being removed from the first portion of the animal tag.

### BRIEF DESCRIPTION

The description is framed by way of example with reference to the drawings which show certain embodiments. However, these drawings are provided for illustration only, and do not exhaustively set out all embodiments.
Figure 1 shows an applicator according to an example embodiment.
Figure 2 shows the first body portion of the embodiment of Figure 1.
Figure 3 shows the locking toggle of the embodiment of Figure 1.
Figure 4 shows the second body portion of the embodiment of Figure 1.
Figure 5 shows the clamp bush of the embodiment of Figure 1.
Figure 6 shows an example variable rate helical spring.
Figure 7 shows a graph of the force exerted by an example helical spring during deflection.
Figure 8 shows a graph of the applied force with respect to time over the actuation of the embodiment of Figure 1.

### DETAILED DESCRIPTION

The description relates to improvements in devices for animals, such as animal tag applicators, animal tissue sample extractors, and animal puncture devices, including but not limited to where such devices are hand-held plier devices. The description and the drawings show a hand-held animal tag applicator as an illustration of how the principles can be applied to such devices. However, the improvements may be applied to any other such device used for animals which operates according to a similar principle, including animal tissue sample extractors and/or animal puncture devices, whether such devices are hand-held or automatic or power assisted devices.

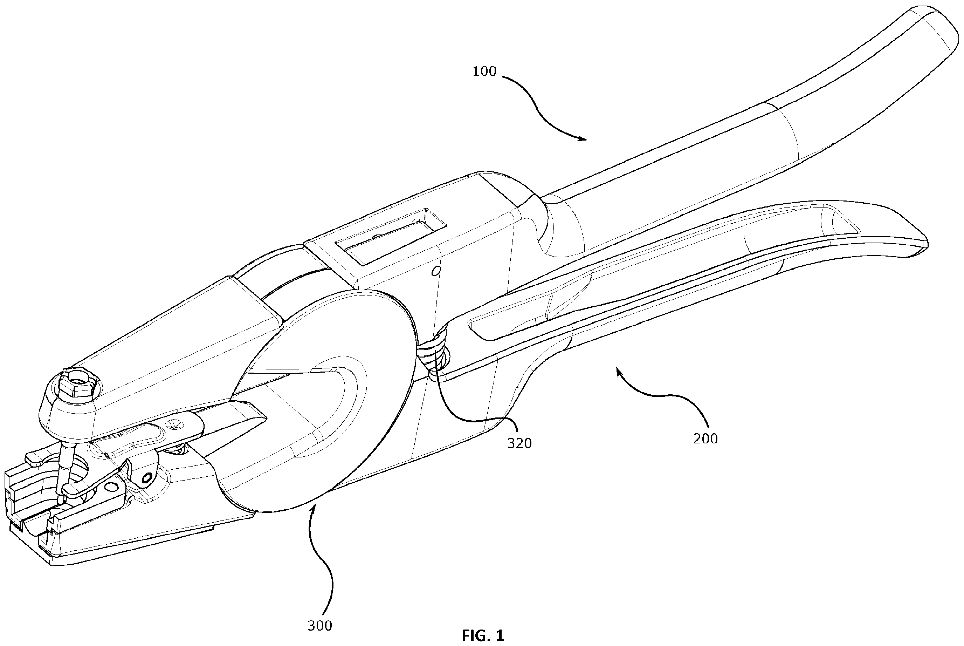

Figure 1 shows an overview of an applicator according to a first embodiment.

The applicator comprises a first body portion 100 and a second body portion 200, which are joined by a clamp bush 300. The first body portion 100 and second body portion 200 pivot relative to one another to allow the applicator to move between open and closed positions. The male and female portions of a tag are attached to respective ends of the first body portion 100 and second body portion 200. As the applicator closes on an animal's ear, the male portion pierces the animal's ear and permanently engages with an aperture in a female portion.

### First Body Portion

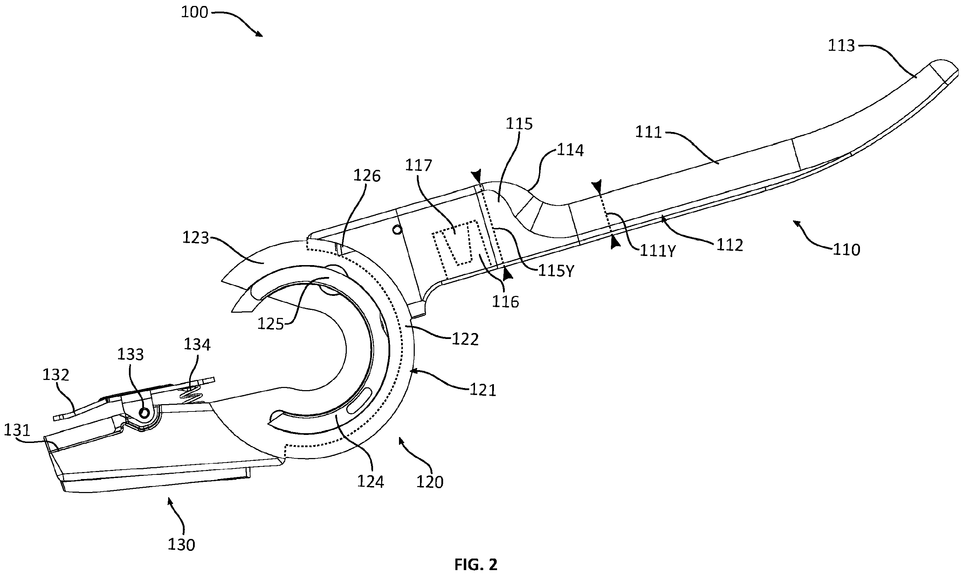

Figure 2 shows the first body portion 100 of an embodiment in further detail.

The first body portion 100 comprises a handle 110 at one end, a jaw portion 130 at the other end, and a central portion 120 between the handle 110 and the jaw portion 130. The edges of the first body portion 100 may be chamfered or rounded in order to avoid sharp corners. That is, the corner between any external faces may be less than about 80°, or less than about 75°, or less than about 60°, or about 45°. This may reduce the risk of injury or discomfort.

In a first arrangement, the handle 110, central portion 120, and jaw portion 130 may be formed in a single piece, for example by being cast from steel (or another metal) which could be then sand blasted and/or powder coated, by being moulded from plastic, or otherwise formed integrally from another material providing sufficient durability.

In a second arrangement, one or more of the handle 110, central portion 120, and jaw portion 130 are separately formed and are configured to be assembled together through connections. For example, the handle 110 and the jaw portion 130 may each be affixed to the central portion 120 removably (such as with screws) or permanently (such as with welding). The separately formed parts may each be formed from different materials, including steel (or another metal) which could be then sand blasted and/or powder coated, plastic, or another material providing sufficient durability.

The first or the second arrangement may be used with in the described embodiments, including with the described features of the described embodiments, without limitation.

The first body portion 100 comprises a handle 110 at one end. The handle 110 comprises a grip 111. The grip 111 is configured such that in use a user may apply force with their hands to the grip 111. The grip 111 is configured to evenly distribute force across a user's hand. To this end, the grip 111 may have a curved profile which is free of any sharp or otherwise discontinuous portions in an area which the user's hand contacts, or might reasonably contact, during ordinary use. By providing such a curved profile, there are no portions which concentrate force on the user's hand. For example, any raised domes or depressed notches are avoided. This avoids discomfort, blisters, or injuries from repeated use. A recess 112 may be formed in the handle 110 opposite the grip 111. The recess 112 may be configured to retain a spare pin, for example through friction fit. The curved profile of the grip 111 and the recess 112 may give the handle a generally saddle-shaped cross-section.

The grip 111 is delimited at a distal end by a curved end 113. The curved end 113 curves away from the recess 112, and can guide a user's fingers towards the grip 111. When a user applies force to the handle 110, their fingers naturally slide towards the distal end of the handle 110. The curved end 113 gently resists this, and therefore can assist in allowing a user's hand to retain contact with the grip 111. This reduces the risk of a user dropping the applicator and/or having the applicator pulled from the user's hand in use, and consequently reduces the risk of injury or discomfort that might occur due to such a dropped or pulled applicator, for example by inadvertently hitting the user, the animal, or a bystander.

The grip 111 is delimited at a proximal end by a shoulder 114. The shoulder 114 discourages a user from gripping the first body portion 100 too near the central portion 120. This reduces the chance of the user touching the helical spring 320 and additionally causes the user's hand to be in a position that creates appropriate leverage. The shoulder 114 may have a curved profile to reduce concentrated pressure on a user's hand. This consequently reduces the risk of blisters or other injury caused by friction from repeated use of the applicator.

The shoulder 114 is integrally formed with a block 115. The height 115Y of the block 115 is greater than the height 111Y of the grip 111. For example, the height 215Y may be between about 5mm and 100mm, or between about 10mm and 70mm, or about 20mm greater than the height 211Y. The block 115 defines a recess 116 having a spigot 117 formed in its centre. The recess 116 is configured to receive and retain a helical spring 320, with the spigot 117 sitting in the centre of the helical spring 320. The recess 116 is spaced laterally from the shoulder 114 to discourage a user's hand from being near the helical spring 320 in use.

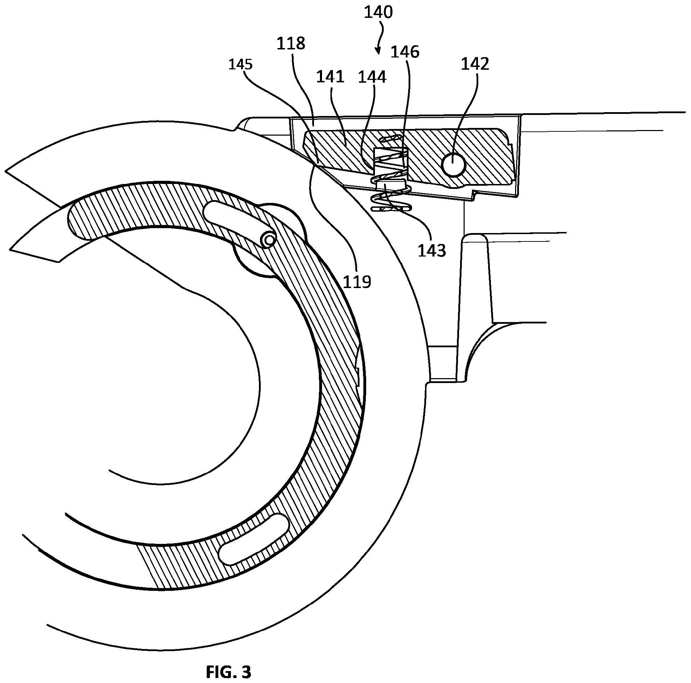

A toggle recess 118 is formed in the outer face of the block 115. The toggle recess is configured to receive a locking toggle 140. The locking toggle 140 is configured to move between a locked position in which the applicator is retained in the closed position and an unlocked position in which the applicator may freely move between the open and closed positions. An opening 119 is formed in the bottom of the toggle recess 118. The locking toggle 140 is shown in more detail in relation to Figure 3.

The height of the block 115 may be approximately aligned with the height of the end of the curved end 113. This generally causes the grip 111 to sit within a recess.

The central portion 120 is generally arcuate. The outer face 121 of the central portion 120 comprises a border 122 around the outer edge of the outer face 121. The border 122 is a raised area of the outer face 121, and the height of the border 122 relative to the outer face 121 may be between 0.1mm and 0.5mm, and in particular may be about 0.3mm. This will minimise the friction when the outer face 121 rotates relative to the clamp bush 300, since only the border 122 contacts the clamp bush 300.

The inner face 123 of the central portion 120 comprises an arcuate groove 124 along substantially its full length. The depth of the groove 124 may be between around 2mm and 20mm, or between around 4mm and 10mm, or around 5mm. A post 125 is mounted in the groove 124.

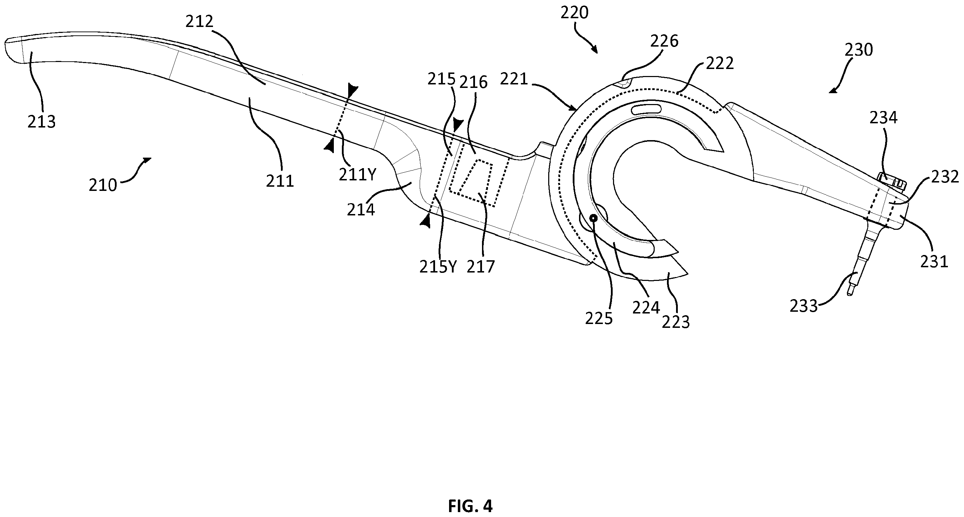

The jaw portion 130 is configured to retain an element for interaction with an animal's ear. In the example shown in Figure 4, this may be a two-piece tag, such that the jaw portion 130 comprises a retainer 131 for retaining a female portion of the tag.

Retainer 131 comprises a plate 132 pivotable about a pin 133. The plate 132 is U-shaped defining an open top. A spring 134 biases the plate 132 towards a cut-out in the jaw portion 130. In use, a female portion of a tag is placed in the cut-out with its aperture aligned in the open top of the plate 132. The bias of the spring 134 pushes the plate 132 onto the female portion which retains the female portion in the retainer 131 and prevents the female portion slipping out in use.

The width 120Z of the central portion 120 is less than the width 110Z of the handle 110 and the width 130Z of the jaw portion 130. The width 120Z may be less than about 70%, or less than about 50%, or less than about 30% of the thickness 130Z. When viewed from the top (that is, from the side of the grip 111), the central portion is offset to one side. This is to allow the central portion 120 to mate with the equivalent of the second body portion 200.

### Locking Toggle

Figure 3 shows the locking toggle 140 in further detail.

The locking toggle 140 comprises a toggle member 141 pivotally mounted on a pin 142 within the toggle recess 118. A spring 146 can be engaged between the spring locator 143 and a cavity 144 within the toggle member 141 to bias the locking toggle 140 into an unlocked position. The provision of the spring location 143 assists in ensuring that the spring is correctly installed and is retained in the toggle recess 118 in use.

The toggle member 141 comprises a key 145 at its distal end.

In use, when the applicator is in the closed position, a user may depress the toggle member 141 against the spring 146 into the toggle recess 118. This causes the key 145 to protrude through the opening 119 of the toggle recess 118. The key 145 may then be received in a rebate 126 of the central portion 120 and a rebate 226 of the central portion 220. As the user releases the force on the handles of the applicator, the helical spring 320 urges the key 145 against the rebates 126 and 226. This impedes the applicator from returning to the opening position, and thus locks the applicator into the closed position.

To unlock the locking toggle 140, a user compresses the handles. This moves the key 145 out of the rebates 126 and 226, and allows the spring 146 to return the locking toggle 140 to the unlocked position.

### Second Body Portion

Figure 4 shows the second body portion 200 in further detail.

The second body portion 200 comprises a handle 210 at one end, a jaw portion 230 at the other end, and a central portion 220 between the handle 210 and the jaw portion 230. The edges of the second body portion 200 may be chamfered or rounded in order to avoid sharp corners. That is, the corner between any external faces may be less than about 80°, or less than about 75°, or less than about 60°, or about 45°. This may reduce the risk of injury or discomfort.

The second body portion 200 may be generally similar to the first body portion 100, except that the jaw portion 230 comprises a retainer 231 for a male portion.

In a first arrangement, the handle 210, central portion 220, and jaw portion 230 may be formed in a single piece, for example by being cast from steel (or another metal) which could be then sand blasted and/or powder coated, by being moulded from plastic, or otherwise formed integrally from another material providing sufficient durability.

In a second arrangement, one or more of the handle 210, central portion 220, and jaw portion 230 are separately formed and are configured to be assembled together through connections. For example, the handle 210 and the jaw portion 230 may each be affixed to the central portion 220 removably (such as with screws) or permanently (such as with welding). The separately formed parts may each be formed from different materials, including steel (or another metal) which could be then sand blasted and/or powder coated, plastic, or another material providing sufficient durability.

The first or the second arrangement may be used with in the described embodiments, including with the described features of the described embodiments, without limitation.

More particularly, the second body portion 200 comprises a handle 210 at one end. The handle 210 comprises a grip 211. The grip 211 is configured to evenly distribute force across a user's hand. The grip 211 is configured such that in use a user may apply force with their hands to the grip 211. To this end, the grip 211 may have a curved profile which is free of any sharp or otherwise discontinuous portions in an area which the user's hand contacts, or might reasonably contact, during ordinary use. By providing such a curved profile, there are no portions which concentrate force on the user's hand. For example, any raised domes or depressed notches are avoided. This avoids discomfort, blisters, or injuries from repeated use. A recess 212 may be formed in the handle 210 opposite the grip 211. The recess 212 may be configured to retain a spare pin, for example through friction fit. The curved profile of the grip 211 and the recess 212 may give the handle a generally saddle-shaped cross-section.

The grip 211 is delimited at a distal end by a curved end 213. The curved end 213 curves away from the recess 212, and can guide a user's fingers towards the grip 211. When a user applies force to the handle 210, their fingers naturally slide towards the distal end of the handle 210. The curved end 213 gently resists this, and therefore can assist in allowing a user's hand to retain contact with the grip 211. This reduces the risk of a user dropping the applicator without the risk of injury or discomfort that might occur due to such a dropped or pulled applicator, for example by inadvertently hitting the user, the animal, or a bystander.

The grip 211 is delimited at a proximal end by a shoulder 214. The shoulder 214 discourages a user from gripping the second body portion 200 too near the central portion 220. This reduces the chance of the user touching the helical spring 320 and additionally causes the user's hand to be in a position that increases the leverage. The shoulder 214 may have a curved profile to reduce the risk of injury to a user if the user contacts the shoulder 214.

The shoulder 214 is integrally formed with a block 215. The height 215Y of the block 215 is greater than the height 211Y of the grip 211. For example, the height 215Y may be between about 5mm and 100mm, or between about 10mm and 70mm, or about 20mm greater than the height 211Y. The block 215 defines a recess 216 having a spigot 217 formed in its centre. The recess 216 is configured to receive and retain a helical spring 320, with the spigot 217 sitting in the centre of the helical spring 320. The recess 216 is spaced laterally from the shoulder 214 to discourage a user's hand from being near the helical spring 320 in use.

The height of the block 215 may be approximately aligned with the height of the end of the curved end 213. This generally causes the grip 211 to sit within a recess.

The central portion 220 is generally arcuate. The outer face 221 of the central portion 220 comprises a border 222 around the outer edge of the outer face 221. The height of the border 222 relative to the outer face 221 may be between 0.1mm and 5 mm, and in particular may be about 3 mm. This can minimise the friction when the outer face 221 rotates relative to the clamp bush 300, since only the border 222 contacts the clamp bush 300.

The inner face 223 of the central portion 220 comprises an arcuate groove 224 along substantially its full length. The depth of the groove 224 may be between around 2mm and 20mm, or between around 4mm and 10mm, or around 5mm. The groove 224 is configured to receive the post 125. In addition, a post 225 is mounted in the groove 224 which is configured to be received in the groove 124. In this way, the post 125 and post 225 can assist in aligning the groove 124 and 224.

In addition, the position of the post 125 and the post 225 relative to the groove 124 and the groove 224 respectively can determine how far the first body portion 100 and second body portion will rotate between the closed position and the open position. That is, once the post 125 or post 225 abut an end of the groove 224 or groove 124 respectively, the applicator will be fully open.

In some cases, the post 125 and the post 225 are located so as to maintain a spacing between the handle 110 and the jaw portion 230 and between the handle 210 and the jaw portion 130 when the applicator is fully open. The spacing may be between about 5mm and 30mm, or between about 10mm and 20mm, or about 15mm. This spacing can minimise the risk of a user being pinched during operation of the applicator.

A rebate 126 and a rebate 226 are each formed as a notch in outer edge of the inner face 123 and the inner face 223. The rebates 126 and 226 are configured to engage with a locking toggle 140.

The jaw portion 230 is configured to retain an element for interaction with an animal's ear. In the example shown in Figure 4, this may be a two-part tag, such that the jaw portion 230 comprises a retainer 231 for retaining a male portion of the tag. Alternatives are described below. Retainer 231 comprises an aperture 232 through which the stem of a pin 233 may pass. A nut 234 engages with the pin 233 on the other end of the aperture 232. This retains the pin 233 with the jaw portion 230. The pin 233 may be replaced by removing the nut 234 and inserting a new pin 233.

The width of the central portion 220 (which is equal to the width 120Z of the central portion 120) is less than the width of the handle 210 and the width of the jaw portion 230 (which are respectively equal to the width 110Z of the handle 110 and the width 130Z of the jaw portion 130), and may be around half the thickness or less. When viewed from the top (that is, from the side of the grip 211), the central portion 220 is offset to one side. This is to allow the central portion 220 to mate with the central portion 120 of the first body portion 100.

### Clamp Bush

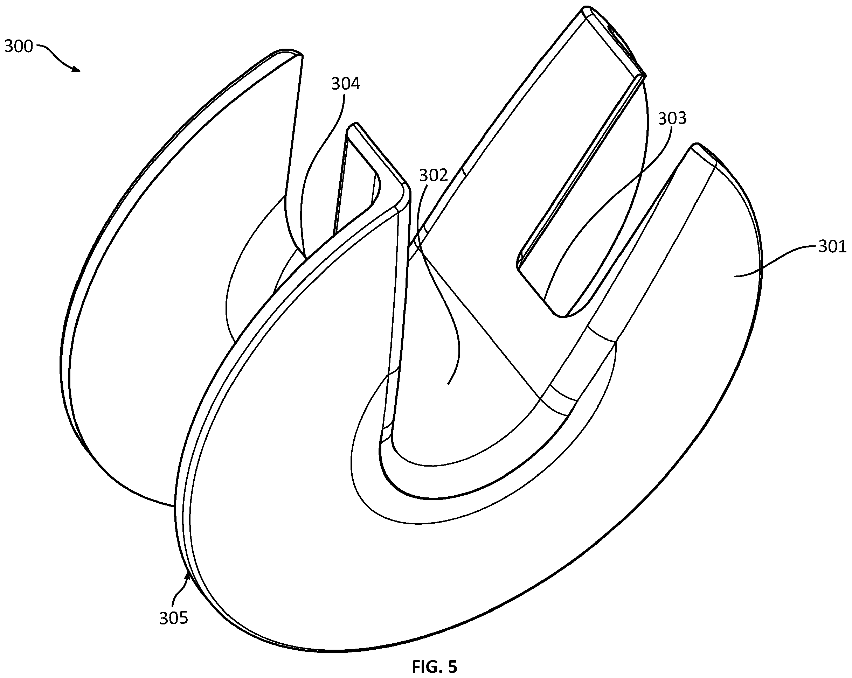

Figure 5 shows an example clamp bush 300. The clamp bush 300 is configured to mate with the first body portion 100 and the second body portion 200 such that the first body portion 100 and second body portion 200 can pivot relative to one another while maintaining engagement at their respective central portions 120, 220.

The clamp bush 300 comprises a pair of arcuate sides 301 configured to generally match the size and shape of the central portions 120 and 220. A panel 302 joins the arcuate sides 301 on the inner edge of the curvature. The outer edge of the curvature is open to define a hollow 305 along the length of the clamp bush 300. This gives the clamp bush 300 a generally saddle-shaped cross-section. A first cut-out 303 and a second cut-out 304 in the panel 302 are configured to respectively engage with the central portion 120 near the jaw portion 130 and the central portion 220 near the jaw portion 230 respectively.

The clamp bush 300 is configured to fit over the central portion 120 and the central portion 220, and to have a snug fit against the border 122 of the central portion 120 and border 222 of the central portion 220. For example, there may be less than about 1mm, or less than about 0.5mm, or about 0.1mm of clearance or less between the border 122 and the clamp bush 300, or between the border 222 and the clamp bush 300. This limits side-to-side movement of the central portion 120 and central portion 220 in the clamp bush 300. However, the clamp bush 300 may not otherwise touch the outer faces of the central portion 120 or central portion 220.

In a first example, to install the clamp bush 300, it is heated to soften the material without deformation. For example, this may require heating the clamp bush 300 to around 90°C. The clamp bush 300 can then be fitted over the central portion 120 and the central portion 220. Once cooled, the installed clamp bush 300 has a snug fit against the border 122 of the central portion 120 and border 222 of the central portion 220.

In a second example, the clamp bush 300 is configured to clip over the central portion 120 and the central portion 220. The clamp bush 200 is formed of material which is flexible enough to be pushed over the central portion 120 and central portion 220. Once so forced, the clamp bush 300 reverts to its original shape, causing a snug fit against the border 122 of the central portion 120 and border 222 of the central portion 220.

In a third example, the clamp bush 300 may be formed of two or more complementary portions. Once the portions are located over the central portion 120 and the central portion 220, they may be bonded. Bonding may be via adhesive (such as glue), through deformation (such as welding or melting), through fixtures (such as screws or rivets), or alternative means. The bonding causes the complementary portions to form a snug fit against the border 122 of the central portion 120 and border 222 of the central portion 220.

The minimal contact between the outer faces of the central portion 120 or central portion 220 and the clamp bush 300 has a disproportionate (and beneficial) effect on the force required to actuate the applicator. First, the minimal contact directly reduces the internal friction within the applicator, which reduces the force required. Further, the reduced internal friction means that a helical spring 320 with a lower tension can be used. The force required by the helical spring 320 must be sufficient to enable the applicator to return to its open position without user intervention, and therefore is a function of the internal friction of the applicator. Thus, by reducing the internal friction within the applicator (for example, by minimising the width of the border 122 and the border 222), this can allow for a lower tension helical spring 320. This in turns means that reduced force is required to actuate the applicator.

In this way, the clamp bush 300 may be a low-friction clamp bush 300 in which the contact between the clamp bush 300 and central portions 120 and 220 may be limited to the borders 122 and 222, rather than substantially the full outer face of the central portions 120 and 220.

### Helical Spring

The helical spring 320 urges the handles 110 and 210 apart to return the hand-held plier device to its open position. This occurs when a user loosens their compression on the handles 110 and 210.

In one embodiment, the helical spring 320 is a variable force spring. A variable force spring is a spring which, when returning from its compressed state to its rest state, exerts force at a non-constant rate through the decompression. This can be accomplished by varying the pitch of the spring along its length, such that a first part of the spring has a first pitch, and a second part of the spring has a second pitch.

The variation in the force may be linear. That is, the force exerted by the spring 320 starts at a first force, which linearly increases to a second force at the end of the decompression. The rate of linear increase is determined by the variation of the pitch of the spring 320.

Alternatively, the variable force spring may be a dual-rate or multi-rate variable force spring, where the change in the force exerted by the spring during decompression changes according to different rates. For example, in the case of a dual-rate spring, as the spring decompresses, the force exerted by the spring increases at a first rate, then transitions to increasing at a second rate. In the case of a multi-rate spring, as the spring decompresses, the force exerted by the spring increases at multiple rates for part of the decompression.

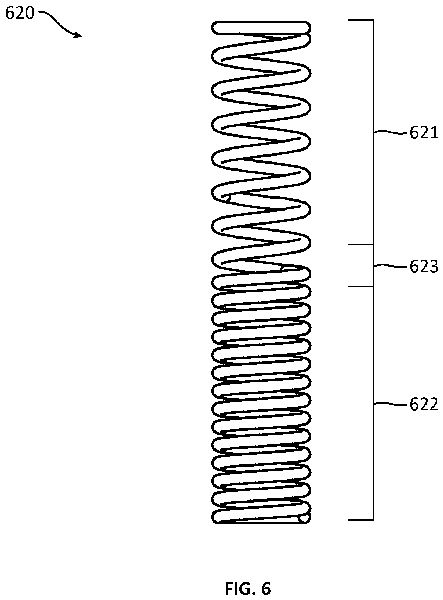

An example of a dual-rate spring is shown in Figure 6. The displayed spring 620 (which may be used as helical spring 320) comprises a first section 621, a second section 622, and a transition section 623 between the first section 621 and the second section 622. The first section 621 may be shorter, longer, or the same as the second section 622. The relationship between the length of the first section 621 and the length of the second section 622 may be selected to adjust the proportion of time at which the spring exerts a first force (corresponding to the first section 621) relative to the proportion of time at which the spring exerts a second force (corresponding to the second section 622) during decompression. In one example, the length of the first section 621 at rest is around 100%, or around 120%, or more than around 150% of the length of the second section 622 at rest. The first section 621 has a pitch less than the second section 621, and may be less than 70%, or less than about 50%, or less than about 30% of the pitch of the second section 621.

The transition section 623 is relatively small compared to the first section 621 and the second section 622, and may be less than about 50%, or less than about 25%, or less than about 10% of the length of the first section 621. The transition section 623 serves to transition between the pitch of the first section 621 and the pitch of the second section 622.

The switch from the first rate to the second rate can occur at any point during the opening process of the device (and in the case of multi-rate springs, the switch between successive rates). In practice, the switch is determined based on the type and operation of the device, but for example is at between about 25% and about 75%, or between about 40% and 60%, or about 50% of the deflection of the spring between a fully compressed state and a fully decompressed (and at rest) state during the opening process. In this case, the opening process of the device refers to the movement of the device from a closed position in which the handles are compressed (which typically occurs from a user squeezing the handles together) to an opening position at which the handles are fully open (which is typically a rest state of the device).

Providing a variable force spring allows for the force of the spring to be exerted when it is most useful during the process of opening the hand-held plier device. Depending on the type of hand-held plier device, it may be useful to have a different level of force at the start of the opening compared to the end of the opening. In an example, the spring is configured to exert maximum force when a portion of the device is being withdrawn (such as when the pin 233 exits the male portion of the tag in an animal tag applicator, or when a punching member in an animal punching device is being removed from the animal. The spring therefore increases the rate of the change of the force at the point in the opening process that this withdrawal occurs. As one example, this may occur at around half-way through the opening process.

In one embodiment, during the first part of the opening process, the force exerted by the helical spring 320 is low. Then during the second part of the opening process, the force exerted by the helical spring 320 is high. In this case, a low force and a high force are low and high relatively to one another. For example, the low force may be less than about 70%, or less than about 50%, or less than about 30% of the high force.

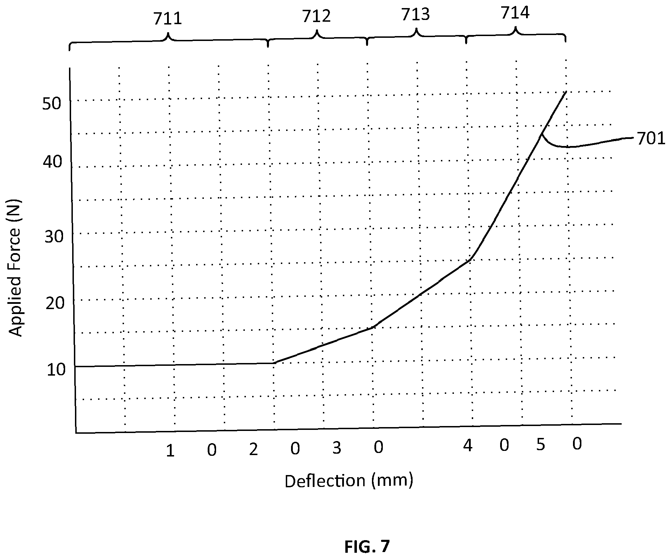

Figure 7 shows the force profile of an example spring. This is one example of how a spring might be configured in a specific application, but other springs in other applications may have different values.

In Figure 7, line 701 demonstrates the force exerted by the spring during decompression over the deflection of the spring. In a first part 711 of the deflection, the force is constant at around 10N, which is consequently a rate of increase of 0 N/mm. In a second part 712 of the deflection, the force increases at a first rate from about 10N to about 15N. This is a rate of increase of about 0.5 N/mm. In a third part 713 of the deflection, the force increases at a second rate from about 15N to about 25N. This is a rate of increase of about 1 N/mm. In a fourth part 714 of the deflection, the force increases at a third rate from about 25N to about 50N. This is a rate of increase of about 2.5 N/mm. This graph therefore characterises a spring at which the force exerted at the start of the decompression is much lower than the force exerted at the end of the decompression, and the rate of change in the force is non-linear.

The use of a variable force spring provides a better user experience, since the force is better matched to the operation of the device. This also reduces the chance of malfunction during use (relative to a linear rate spring) due to insufficient force at the appropriate time (such as a pin of animal tag applicator getting stuck due to insufficient force from the spring) and/or excessive force being applied when not needed for operation.

In another embodiment, the helical spring 320 may instead be a linear rate spring. That is, the force exerted by the spring during decompression can be consistent. This provides a simple and consistent force, which may be useful when no part of the opening process requires more force than any other.

### Operation

When the applicator is to be used, and with the applicator in the open position, a user charges the applicator. For example, in the case of a two-part tag, the user places a female portion of a tag on the retainer 131 and a complementary male portion of the tag on the retainer 231. The female portion is held in place by the plate 132 and the male portion is held in place by friction fit with the pin 233.

In use, a user holds the grip 111 and grip 211. This may be in a single hand or with two hands. The user's hand or hands are guided into the correct placement on the grip 111 by curved end 113 and shoulder 114, and grip 211 by curved end 213 and shoulder 214 to minimise the risk of injury of the user's hand during use or from the user dropping the device. An animal's ear, for example, is placed between the jaw portion 130 and the jaw portion 230 with the male portion of the pin near the location at which the tag should be attached to the animal.

The user pushes against the grip 111 and the grip 211 to force the handles 110 and 210 toward each other against the bias of the helical spring 320. This causes the post 125 to move along the groove 224 in one rotational direction and the post 225 to move along the groove 124 in the opposite rotational direction. This pivots the first body portion 100 and the second body portion 200 relative to each other with low friction while retaining the groove 124 and groove 224 in alignment.

This causes the jaw portion 130 to move towards the jaw portion 230 and for the applicator to enter the closed position. The male portion pierces the animal's ear and enters the aperture of the female portion. When the male portion has entered sufficiently far into the female portion to be retained, the user may release the pressure on the handles 110 and 210. This allows the helical spring 320 to force the handles 110 and 210 apart. Where the helical spring 320 is a variable rate spring, the helical spring 320 increases the force as the pin is being released from the male portion. The engagement between the male portion and female portion is sufficient for the male portion to be pulled off the pin 233.

Once the applicator returns to the open position, though maintaining a spacing between the handle 110 and the jaw portion 230 and between the handle 210 and the jaw portion 130 to minimise the risk of pinching a user's hand, the user can pull the applicator laterally away. This causes the female portion to slide out of the retainer 131 and thus to be disengaged from the applicator. The applicator can then be recharged for subsequent use.

### Other Implementations

The embodiments above have been described in terms of an animal tag applicator. Consequently, the jaw portions 130 and 230 may be configured for use with two-piece tags, where one of the jaw portions holds the male piece and the other jaw portion holds the female piece.

However, the device may be adapted for use as any of a range of hand-held plier devices for animals. Such hand-held plier devices may be generally the same as the configuration as the described applicator but are configured with different jaw portions 130 and 230. The device may additionally or alternatively be adapted for power assisted devices for animals, where a user's compression of the handles is assisted by an actuator, motor, or other mechanical, electrical, hydraulic, or pneumatic mechanism. The device may additionally or alternatively be adapted for use as part of an automated system where the user does not manually press handles together, but instead the jaws are actuated by an actuator, motor, or other mechanical, electrical, hydraulic, or pneumatic mechanism.

In alternative cases, the jaw portion 230 may be configured to hold a one-piece tag, such as a tag with a barbed end. In such a case, the jaw portion 130 may have an opening to allow the one-piece tag to enter the ear of the animal without retaining any analogue to a female piece of a two-piece tag.

In a further alternative, the applicator is instead formed as an animal tissue sample extractor. In this case, the jaw portion 230 holds a piercing member (such as a cylindrical punch having a sharpened end) and the jaw portion 130 holds a collection member (such as a vial). In use, the piercing member cuts out a portion of the animal's ear which is then retained in the collection member.

In a further alternative, the applicator is formed as a combination identification tag applicator and animal tissue sample extractor. In this case, the jaw portion 230 holds a punching member (such as a cylindrical punch having a sharpened end) configured to retain an animal identification tag, and the jaw portion 130 holds a collection member (such as a vial). In use, the punching member cuts out a portion of the animal's ear which is then retained in the collection member, and then causes the animal identification tag to be retained in the animal's ear.

In a further alternative, the applicator is instead formed as an animal puncture device. In this case, the jaw portion 230 holds a punching member (such as a cylindrical punch having a sharpened end) and the jaw portion 130 is shaped to allow the punched portion of flesh to fall out of the device. In use, the punching member can cut out a hole in the animal's ear.

In each of these implementations of hand-held plier devices for animals, the jaw portion 130 and the jaw portion 230 vary according to the preferred use. However, the other parts of the device, and consequently the advantages of those parts, remain the same.

### Force

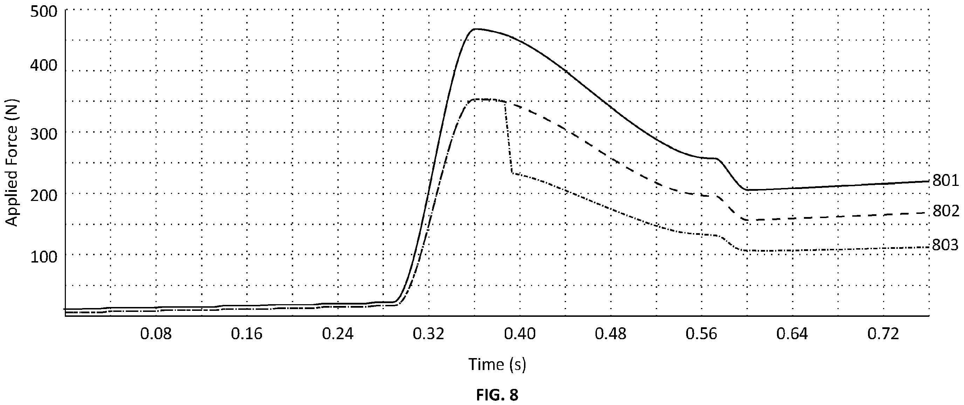

Figure 8 shows a graph of how the applied force varies with respect of time over the actuation of the applicator.

Line 801 represents an example prior art applicator. The peak force required to actuate the applicator is more than around 450N.

Line 802 represents a one-handed applicator according to a first embodiment and line 803 represents a two-handed applicator according to a second embodiment. In both cases, the construction of the applicator allows actuation to occur at less than around 400N (and in particular, at around 350N). This reduces action force allows greater ease of use compared to the prior art applicator.

For a given force applied by a user to a handle, the torque is a function of the distance from the pivot point. If excess torque is applied to a handle, the handle may bend or warp when used. Conventionally, damage such as this to the handle would be avoided by limiting the length of the handle: by moving a user's hand closer to the pivot point, the amount of torque applied by the user is decreased. However, this limited the maximum length of the handle, and impeded the development of a longer-handled applicator, including two-handed applicator.

However, as noted above, the present applicator is designed to have a relatively low internal friction and thus to reduce the required actuation force. This consequently reduces the torque exerted on the ends of the handles 110 and 210, and so allows for relatively longer handles 110 and 210 for a given material, including longer handle applicators designs for single hand use and two-handed applicators. For example, a one-handed applicator may have a length of less than around 280mm (for example, between around 200mm and around 280mm, or more preferably around 266mm) and a two-handed applicator may have a length of more than around 300mm (for example, between around 280mm and around 350mm, or preferably around 317mm). The ability to have longer handle applicators (whether a single-hand applicator or a two-handed applicator) can allow an applicator to be users that have different strengths. For example, a weaker user may be able to use a longer handled single-hand applicator or a two-handed applicator in a way that they could not use shorter handled single-hand applicators.

As one example, the improvements to the applicator enable the applicator to have a handle configured for two-handed use. This improves accessibility for users who may not be able to actuate an applicator with one hand to nevertheless use the two-handed actuator.

In this way, the described embodiments provide an applicator which may be safer and easier to use for applying tags to animals.

### Interpretation

The term "comprises" and other grammatical forms is intended to have an inclusive meaning unless otherwise noted. That is, they should be taken to mean an inclusion of the listed components, and possibly of other non-specified components or elements.

While the present invention has been explained by the description of certain embodiments, the invention is not restricted to these embodiments. It is possible to modify these embodiments without departing from the spirit or scope of the invention.

## Claims

1. An animal tag applicator, comprising:
a first body portion comprising:
a first jaw portion configured to engage a first portion of an animal tag;
a first handle portion; and
a first central portion between the first jaw portion and the first handle portion;
a second body portion comprising:
a second jaw portion configured to engage a second portion of an animal tag;
a second handle portion; and
a second central portion between the second jaw portion and the second handle portion; and
a clamp bush configured to retain the first central portion and the second central portion together;
wherein an outer face of the first central portion comprises a border around an outer edge of the outer face of the first central portion and the outer face of the second central portion comprises a border around an outer edge of the outer face of the first central portion.

2. The animal tag applicator of claim 1, wherein the height of the border relative to the corresponding outer face is between about 0.1mm and about 0.5mm.

3. The animal tag applicator of claim 2, wherein the height of the border relative to the corresponding outer face is about 0.3mm.

4. The animal tag applicator of any one of claims 1 to 3, wherein the clamp bush is configured to limit side-to-side movement of the first central portion and the second portion within the clamp bush.

5. The animal tag applicator of any one of claims 1 to 4, wherein a clearance between an inner surface of the clamp bush and the border of the first central portion is about 0.1mm and a clearance between an inner surface of the clamp bush and the border of the second central portion is about 0.1mm.

6. The animal tag applicator of any one of claims 1 to 5, wherein the clamp bush is configured to minimise friction when the first central portion and/or second central portion move relative to the clamp bush.

7. The animal tag applicator of any one of claims 1 to 6, wherein a clearance between an inner surface of the clamp bush and the first central portion, other than the border, is about 0.3mm and a clearance between an inner surface of the clamp bush and the second central portion, other than the border, is about 0.3mm.

8. The animal tag applicator of any of claims 1 to 7, wherein a force of less than around 400N is required to move the animal tag applicator into a closed position.
